Europäisches Patentamt

European Patent Office

Office européen des brevets

(19)

(11) **EP 0 833 470 B1**

(12) **EUROPÄISCHE PATENTSCHRIFT**

(45) Veröffentlichungstag und Bekanntmachung des Hinweises auf die Patenterteilung:
**18.10.2006 Patentblatt 2006/42**

(51) Int Cl.:
*H04J 3/06* (2006.01)    *H04L 7/04* (2006.01)
*H04L 27/38* (2006.01)

(21) Anmeldenummer: **97113422.6**

(22) Anmeldetag: **04.08.1997**

(54) **Verfahren zum Ermitteln einer Trägerfrequenzabweichung**

Method for determining the frequency drift of a carrier

Procédé pour la détermination de la dérive fréquentielle d'une porteuse

(84) Benannte Vertragsstaaten:
**DE FR GB**

(30) Priorität: **25.09.1996 DE 19639309**

(43) Veröffentlichungstag der Anmeldung:
**01.04.1998 Patentblatt 1998/14**

(73) Patentinhaber: **Rohde & Schwarz GmbH & Co. KG
81671 München (DE)**

(72) Erfinder: **Schmidt, Kurt, Dr.-Dipl.-Ing.
85567 Grafing (DE)**

(74) Vertreter: **Körfer, Thomas et al
Mitscherlich & Partner,
Patent- und Rechtsanwälte,
Sonnenstrasse 33
80331 München (DE)**

(56) Entgegenhaltungen:
EP-A- 0 317 127      EP-A- 0 369 917
US-A- 5 151 926      US-A- 5 390 216

• LUI, G.L.; TAN, H.H.: "Frame synchronization for Gaussian Channels" IEEE TRANSACTIONS ON COMMUNICATIONS, Bd. COM-35, Nr. 8, 1. August 1987 (1987-08-01), Seiten 818-829, XP000978649 New York

## Beschreibung

Die Erfindung betrifft ein Verfahren zum Ermitteln einer Trägerfrequenzabweichung, wobei zunächst die zeitliche Lage einer Synchronisationsfolge in einem empfangenen Datenstrom (Rahmensynchronisation) unter Anwendung des Prinzips der Maximum-Likelihood-Theorie bestimmt wird.

Ein Rahmensynchronisationsverfahren dieser Art ist bekannt (James L. Massey: "Optimum Frame Synchronization", IEEE Trans. on Comm., Vol.Com.20, Apr. 1972, pp. 115-119 und R. Mehlan, H. Meyr: "Optimum Frame Synchronization For Asynchronous Packet Transmission", ICC 1993 in Genf, Vol.2/3, pp. 826-830). Diese ausschließlich verwendeten Rahmensynchronisationsverfahren besitzen den Nachteil, daß vor der eigentlichen Rahmensynchronisation eine Takt-, Träger- und Phasensynchronisation durchgeführt werden muß. Eine Träger- und Phasensynchronisation ohne vorher durchgeführter Rahmensynchronisation und damit ohne Kenntnis der Datenfolge ist nur mit sogenannten Non-Data-Aided (NDA)-Verfahren möglich. Bei der Übertragung von höherstufigen MQAM-Signalen beträgt bei solchen NDA-Verfahren die theoretisch zulässige Frequenzabweichung zwischen Sender und Empfänger 12,5 % der Symbolrate, bei MPSK sogar nur $1/M \cdot 50$ %. Bei TDMA-Übertragungen darf eventuell nur der eigene Burst zur Takt-, Phasen- und Trägersynchronisation verwendet werden und hierbei besteht bei Anwendung der bekannten Rahmensynchronisationsverfahren das weitere Problem, daß die zeitliche Lage des Bursts aufgrund der noch nicht durchgeführten Rahmensynchronisation nicht bekannt ist und erst durch zusätzliche Hilfsmittel bestimmt werden muß.

In dem Paper "Frame synchronization for Gaussian Channels" von LUI, G.L. und TAN, H.H., IEEE TRANSACTIONS ON COMMUNICATIONS, Bd. Com-35, Nr. 8, 1. August 1987 (1987-08-01), Seiten 818-829, New York ist ein Verfahren zum Bestimmen der zeitlichen Lage einer Synchronsationsfolge in einem empfangenen Datenstrom unter Anwendung des Prinzips der Maximum-Likelihood-Theorie offenbart.

Der Erfindung liegt die Aufgabe zugrunde, ein Verfahren für alle linearen Modulationsverfahren zum Ermitteln einer Trägerfrequenzabweichung mit Bestimmung der zeitlichen Lage einer Synchronisationsfolge in einem empfangenen Datenstrom anzugeben.

Diese Aufgabe wird erfindungsgemäß gelöst durch die Merkmale des Anspruchs 1. Vorteilhafte Weiterbildungen, insbesondere auch bezüglich einer einfachen Berechnung der Trägerfrequenzabweichung, ergeben sich aus den Unteransprüchen.

Durch die erfindungsgemäß gewählten Bedingungen für die Anwendung der an sich bekannten Maximu-Likelihood-Theorie wird es möglich, die Rahmensynchronisation unmittelbar aus der empfangenen Datenfolge noch vor der Träger- und Phasensynchronisation durchzuführen und zwar entweder noch vor oder nach der Taktsynchronisation. Damit ist für die nachfolgenden Verfahrensschritte wie Taktsynchronisation oder Träger- und Phasensynchronisation die zeitliche Lage der Synchronisationsfolge bereits bekannt und damit werden die beim MQAM-Verfahren bzw. TDMA-Verfahren erwähnten obigen Nachteile vermieden. Dies hat zur Folge, daß die theoretisch zulässige Frequenzabweichung für alle linearen Modulationsverfahren 50 % der Symbolrate betragen darf.

Die Erfindung wird im folgenden anhand schematischer Zeichnungen an Ausführungsbeispielen näher erläutert.

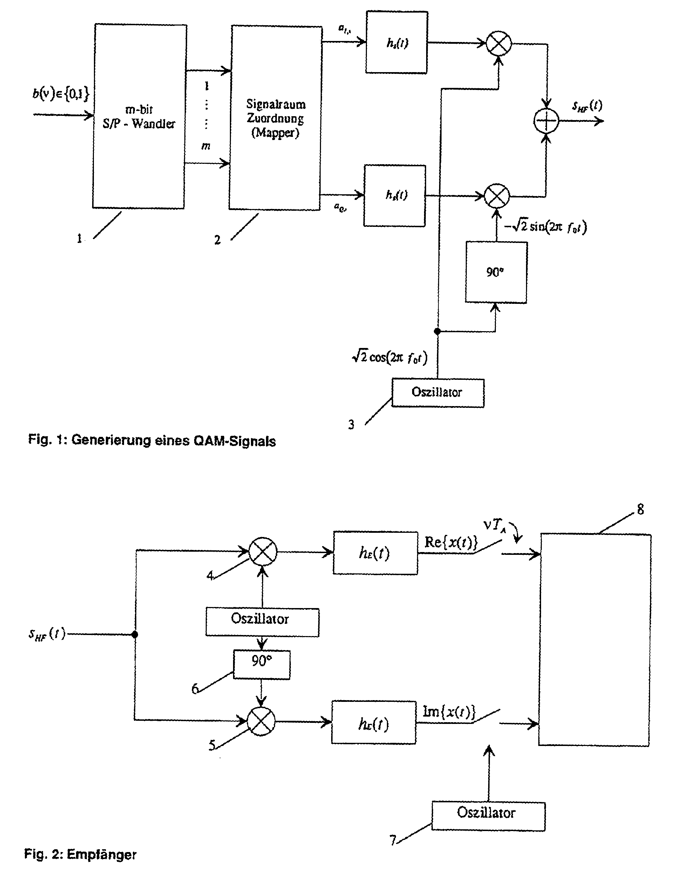

**Fig. 1** zeigt schematisch die senderseitige Aufbereitung allgemein für lineare Modulationsverfahren. Hierbei werden in einem Serien/Parallelwandler 1 mehrere $m$-Bit des zu übertragenden seriellen Datenstroms zu einem höherwertigen komplexen Symbol $a_\nu$ zusammengefaßt. Der kompexe Signalraum umfaßt $M$ Elemente. In dem Mapper 2 werden auf diese Weise komplexe Symbolwerte mit Realteil $a_{I,\nu}$ und Imaginärteil $a_{Q,\nu}$ erzeugt, die anschließend durch die um 90˚ gegeneinander phasenverschobenen Trägerfrequenzen eines Trägergenerators 3 zu dem zu übertragenden Hochfrequenzsignal addiert werden. Bei Offset-Modulationsverfahren muß im Quadraturzweig zusätzlich vor der Modulation eine Verzögerung um eine halbe Symbolperiode $T_s/2$ vorgenommen werden.

**Fig. 2** zeigt den zugehörigen Quadraturempfänger. Das empfangene Hochfrequenzsignal wird wieder in zwei Mischern 4 und 5 mit den um 90˚ gegeneinander phasenverschobenen Überlagerungsfrequenzen eines Trägeroszillators 6 ins Basisband heruntergemischt und anschließend werden die Basisbandsignale mittels eines Taktgenerators 7, dessen Taktfrequenz $f_A = 1/T_A$ ein ganzzahliges Vielfaches der Symbolrate $f_s = 1/T_s$ ist, abgetastet. Die Abtastrate muß so groß gewählt werden, daß das Abtasttheorem erfüllt ist. Der Oversampling-Faktor gibt hierbei gemäß

$$ov = \frac{f_A}{f_s}$$

das Verhältnis von Abtastfrequenz zur Symbolrate an.

Im Gegensatz zu den rückgekoppelten Demodulationsverfahren wird der Oszillator 6 nicht auf die Trägerfrequenz und Trägerphase nachgeregelt, sondern der Oszillator 6 ist in seiner Frequenz mit einer maximal zulässigen Abweichung von 50 Prozent der Symbolrate genau auf die senderseitige Trägerfrequenz eingestellt. Auch der Taktgenerator 7 wird nicht in seiner Phase geregelt, nur die Taktfrequenz ist auf den Wert des entsprechenden Modulationsverfahrens eingestellt. Die nachfolgende Weiterverarbeitung erfolgt in der Anordnung 8, deren Funktion und Wirkungsweise nachfolgend beschrieben wird.

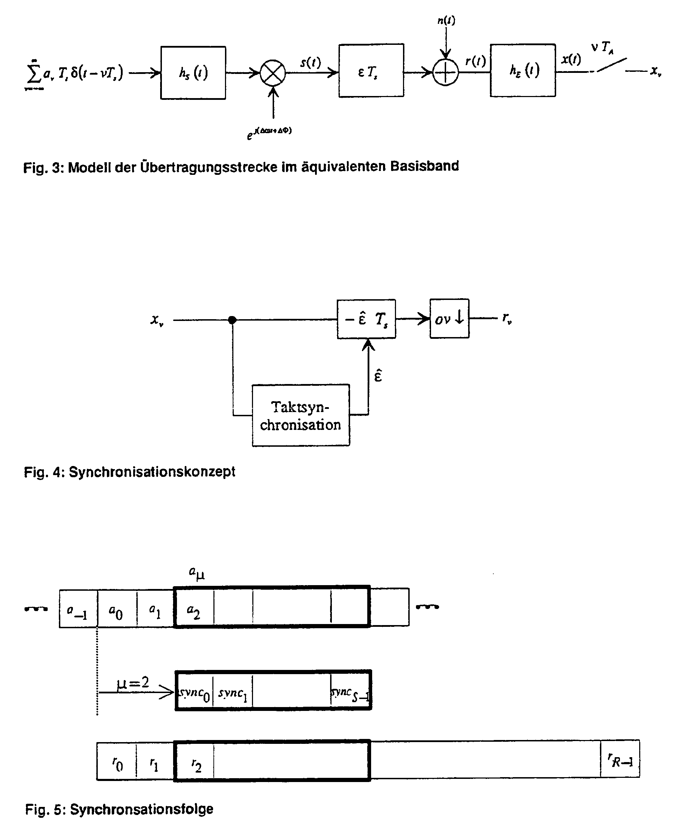

**Fig. 3** zeigt das anhand der Fig. 1 und 2 geschilderte Übertragungsmodell in der äquivalenten Basisbanddarstellung. Ausgangspunkt ist die zu übertragende digitale komplexe mit den Symbolen gewichtete Diracfolge

$$\sum_{\nu=-\infty}^{\infty} a_\nu T_s \delta\left(t - \nu T_s\right)$$

Dieses Signal läßt sich darstellen als die Summe zweier mit den Symbolwerten $a_{I,\nu}$, $a_{Q,\nu}$ gewichteter Diracimpulse zu den Zeiten $t = \nu \cdot T_s$, in Real- und Imaginärteil. Die Symbole

$$a_\nu = a_{I,\nu} + j a_{Q,\nu}$$

können z.B beim Modulationsverfahren MQAM die Werte $a_{I,\nu}$, $a_{Q,\nu} \in \{\pm 1, \pm 3, \pm 5, \cdots\}$ annehmen. Weiterhin sind andere lineare Modulationsverfahren wie z.B. $\pi/4$-QPSK mit $a_{I,\nu}$, $a_{Q,\nu} \in \{\pm 1 e^{j\nu\pi/4}, \pm j e^{j\nu\pi/4}\}$ oder das Offset-MQAM-Verfahren möglich, bei dem der Imaginärteil $a_Q$, um eine halbe Symnbolperiode verzögert wird. Anschließend wird die Symbolfolge auf das Sendefilter mit der Impulsantwort $h_s(t)$ gegebenen.
Das Sendesignal $s(t)$ erhält man durch

$$s(t) = \left[\sum_{\nu=-\infty}^{\infty} a_{I,\nu} T_s h_s\left(t_s - \nu T_s\right) + j \sum_{\nu=-\infty}^{\infty} a_{Q,\nu} T_s h_s\left(t - \nu T_s\right)\right] \cdot e^{j(\Delta\omega t + \Delta\Phi)}$$

Der zwischen Sender und Empfänger unbekannte Frequenzversatz $\Delta f$ und Phasenversatz $\Phi$ wird durch eine Multiplikation mit dem Drehzeiger $e^{j(2\pi\Delta ft + \Delta\Phi)}$ berücksichtigt.
Der im Empfänger unbekannte Zeitversatz $\varepsilon T_s$ gegenüber den idealen Abtastzeitpunkten wird durch den nachfolgenden Systemblock realisiert. Die Werte $\varepsilon$ liegen dabei in dem Bereich

$$-0.5 \le \varepsilon < 0.5$$

Das verzögerte Sendesignal wird auf der Übertragungsstrecke durch additives weißes Gaußsches Rauschen (AWGN) $n(t)$ gestört, es entsteht das Empfangssignal $r(t)$. Das Rauschsignal ist gemäß

$$n(t) = n_I(t) + j n_Q(t)$$

komplexwertig. Der Realteil $n_1(t)$ und der Imaginärteil $n_Q(t)$ besitzen das zweiseitige Leistungsdichtespektrum (LDS) $N_0/2$ und sind voneinander statistisch unabhängig. Die mittlere Leistung des gesendeten Signales $s(t)$ ergibt

$$P_s = \overline{\mathrm{E}\left\{|s(t)|^2\right\}} = \frac{1}{T_s} \int_0^{T_s} \mathrm{E}\left\{|s(t)|^2\right\} dt$$

da der Erwartungswert zeitabhängig und periodisch mit $T_s$ ist. Die mittlere Symbolenergie des Sendesignals berechnet sich mit

$$E_s = P_S \cdot T_s = \overline{\mathrm{E}\left\{|s(t)|^2\right\}} \cdot T_s = \int_0^{T_s} \mathrm{E}\left\{|s(t)|^2\right\} dt$$

Fig. 4 zeigt das Synchronisationskonzept mit der Eingangsfolge $x_v$ von Fig. 3. Diese Folge wird zur Taktsynchronisation mit anschließender Kompensation mit dem geschätzten Zeitversatz $-\hat{\varepsilon}\, T_s$ verwendet. Die Taktsynchronisation erfolgt ohne Kenntnis der übertagenen Symbole (Non-Data-Aided) und ist unkritisch. Nach Unterabtastung um den Oversampling-Faktor $ov$ liegen nur noch die Abtastwerte $r_v$ zu den intersymbolinterferenzfreien Symbolzeitpunkten vor. Bei den Offset-Verfahren muß vor der Unterabtastung die Verzögerung um die halbe Symbolperiode rückgängig gemacht werden. Die nachfolgend hergeleitete Rahmensynchronisation kann entweder von der nicht timingkompensierten Folge $x_v$ oder von der nur zu den Symbolzeitpunkten vorliegenden Folge $r_v$ vorgenommen werden. Die Rahmensynchronsation durch die nicht timingkompensierten Folge $x_v$ kann z.B erforderlich sein, wenn ein TDMA-System vorliegt und zur Timing-Schätzung nur der in der zeitlichen Lage noch nicht bekannte Burst verwendet werden darf. Bei Rahmensynchronisation mit $x_v$ wird die noch verbleibende Abweichung vom Symbolzeitpunkt (maximal eine halbe Abtastperiode) anschließend durch die Taktsynchronisation geschätzt und rückgängig gemacht.

Wegen der einfacheren Nomenklatur wird die Herleitung des Verfahrens für die Folge $r_v$ durchgeführt. Das hergeleitete Verfahren ist ebenso für die nicht timingkompensierte Folge $x_v$ gültig. Der wesentliche Unterschied besteht darin, daß wegen des noch unbekannten Symbolzeitpunktes die Sync-Folge nicht im Symbolraster, sondern im Abtastraster gesucht werden muß. Bei Rahmensynchronisation durch die Folge $x_v$ liegt die Folge nicht exakt zum Symbolzeitpunkt vor und es entsteht ein zusätzlicher Fehler durch Intersymbolinterferenzen. Deshalb sollte in diesem Fall der Oversampling-Faktor mindestens $ov = 4$ betragen.

Fig. 5 zeigt die Einbettung der Sync-Folge $sync_v$ in der übertragenen Symbolfolge $a_v$. Die Länge der Sync-Folge beträgt $S$ Symbole. Die Sync-Folge beginnt nach $\mu$ Symbolperioden nach den Zeitnullpunkt. Die Aufgabe der Rahmensynchronisation besteht darin, diese im Empfänger nicht bekannte zeitliche Lage zu bestimmen. Die Sync-Folge ist im Empfänger bekannt. In Fig. 4 wird bespielhaft $\mu = 2$ gezeigt. Im Empfänger beginnt die Verarbeitung zum Zeitnullpunkt. Zur Rahmensynchronisation werden $R$ Abtastwerte der Folge $r_v$ ausgewertet. Es wird im weiteren vorausgesetzt, daß die Länge $R$ des Empfangsvektors $\Gamma$ so groß gewählt wird, daß eine vollständige Sync-Folge enthalten ist.

**A. Taktsynchronisation**

Die Folge $x_v$ in Fig. 4 wird zur Taktphasenschätzung von dem unbekannten normierten Zeitversatz $\varepsilon$ verwendet. Das Verfahren zur Taktsynchronisation ist rückkopplungsfrei und bekannt (K. Schmidt: Digitale Taktrückgewinnung für bandbreiteneffiziente Mobilfunksysteme, Dissertation, Inst. für Nachrichtentechnik, Darmstadt, Dez. 1993 und Oerder: Algorithmen zur digitalen Taktsynchronisation bei Datenübertragung, Lehrstuhl für Elektrische Regelungstechnik, Aachen, 1989). Anschließend wird die geschätzte zeitliche Verschiebung $\hat{\varepsilon}\, T_s$ (das Dach wird generell bei Schätzwerten verwendet) durch ein Interpolationsfilter wieder rückgängig gemacht. Anschließend wird eine Unterabtastung um den Oversampling-Faktor $ov$ gemacht und es entseht in der Folge $r_v$ die noch phasengedrehten Symbole. Grundlegende Betrachtungen zur Kompensation können in (K. Schmidt: "Digitale Taktrückgewinnung für bandbreiteneffiziente Mobilfunksysteme", Dissertation, Inst. für Nachrichtentechnik, Darmstadt, Dez. 1993 und Kammeyer: "Nachrichtenübertragung", Teubner-Verlag, Stuttgart, 1992) nachgelesen werden.

**B. Rahmensynchronisation**

Den Ausgangspunkt bildet die Maximum-Likelihood-Funktion gemäß GI.(1)

$$L\left(\bar{\mu}, \Delta\tilde{\omega}, \Delta\tilde{\Phi}\right) = \underbrace{e^{\frac{-1}{N_0}\sum_{v=\bar{\mu}}^{\bar{\mu}+S-1}\left|r_v\cdot e^{-j(\Delta\tilde{\omega}\,vT_s+\Delta\tilde{\Phi})}-sync_{v-\bar{\mu}}\right|^2}}_{1.\text{ Therm}} \cdot \underbrace{E_a\left\{e^{\frac{-1}{N_0}\sum_{v_{rest}}\left|r_v\cdot e^{-j(\Delta\tilde{\omega}\,vT_s+\Delta\tilde{\Phi})}-a_v\right|^2}\right\}}_{2.\text{ Therm}}$$

$$(1)$$

welche durch Variation des Versuchsparameters $\bar{\mu} = (0.R - S]$ maximiert werden soll. Hierbei beschreibt $v_{rest}$ gemäß

$$v_{rest} = \left[0, \bar{\mu}\right[ \text{ und } \left]\bar{\mu} + S - 1, R - 1\right]$$

den $vv$-Bereich des Vektors $\Gamma$ außerhalb der vermuteten Syncfolge mit der Randomsymbolen $a_v$. Grundsätzlich werden die Versuchsparameter mit einer Schlange und Schätzparameter mit einem Dach versehen. In den nachfolgeden Schritten wird die Vereinbarung getroffen, daß alle für das Verfahren irrelevanten Therme zu eins gesetzt werden, ohne eine neue Funktion zu definieren.

Zuerst wird der erste Therm in Gl.(1) vereinfacht und erhält Gl.(2)

$$1.\text{ Therm} = e^{\frac{-1}{N_0}\sum_{v=\bar{\mu}}^{\bar{\mu}+S-1}\underbrace{|r_v|^2+|sync_{v-\bar{\mu}}|^2}_{irrelevant}-2\cdot Re\left\{r_v\cdot e^{-j(\Delta\tilde{\omega}\,vT_s+\Delta\tilde{\Phi})}\cdot sync_{v-\bar{\mu}}^*\right\}}$$

$$= const_1\cdot e^{\frac{1}{N_0}\sum_{v=\bar{\mu}}^{\bar{\mu}+S-1}2\cdot Re\left\{r_v\cdot e^{-j(\Delta\tilde{\omega}\,vT_s+\Delta\tilde{\Phi})}\cdot sync_{v-\bar{\mu}}^*\right\}}$$

$$(2)$$

Beim zweiten Therm in Gl.(1) ist die Random-Folge $a_v$ nicht bekannt, weshalb auch der Erwartungswert bzgl. dieser Folge gebildet werden muß:

$$2.\text{ Therm} = E_a\left\{e^{\frac{-1}{N_0}\left(\sum_{v_{rest}}|r_v|^2+|a_v|^2-2\cdot Re\left\{r_v\cdot e^{-j(\Delta\tilde{\omega}\,vT_s+\Delta\tilde{\Phi})}\cdot a_v^*\right\}\right)}\right\}$$

$$= E_a\left\{\prod_{v_{rest}}e^{\frac{-1}{N_0}\left(\underbrace{|r_v|^2+|a_v|^2}_{irrelevant}-2\cdot Re\left\{r_v\cdot e^{-j(\Delta\tilde{\omega}\,vT_s+\Delta\tilde{\Phi})}\cdot a_v^*\right\}\right)}\right\}$$

Durch Ausnutzung der statistischen Unabhängigkeit der Symbole $a_v$ ergibt sich weiterhin

$$2.\text{ Therm} = const_2\cdot \prod_{v_{rest}} E_{a_v}\left\{e^{\frac{1}{N_0}2\cdot Re\left\{r_v\cdot e^{-j(\Delta\tilde{\omega}\,vT_s+\Delta\tilde{\Phi})}\cdot a_v^*\right\}}\right\}$$

$$(3)$$

Im folgenden wird von einem Störabstand $E_s/N_0 \gg 1$ ausgegangen. Dann läßt sich beim tatsächlichen Frequenz- und Phasenversatz Gl.(3) durch

$$2.\ \text{Therm} \ \approx \ const_2 \cdot \prod_{v_{ren}} e^{\frac{1}{N_0} 2|r_v| \cdot |a_v|}$$

$$(4)$$

annähern. Da die Random-Folge $a_v$ nicht bekannt ist, wird der Schätzwert $|\hat{a}_v|$ verwendet. Man beachte, daß nicht das Symbol, sondern nur dessen Betrag geschätzt werden muß. Folglich ist hierfür keine Frequenz- und Phasensynchronisation notwendig. Durch Einsetzen der Gln.(2,4) in Gl.(1) und anschließender Logarithmierung erhält man die Log-Likelihood-Funktion

$$l\left(\tilde{\mu}, \Delta\tilde{\omega}, \Delta\tilde{\Phi}\right) = \ln\left[L\left(\tilde{\mu}, \Delta\tilde{\omega}, \Delta\tilde{\Phi}\right)\right]$$

$$= \underbrace{const}_{= 1} \cdot \left( \sum_{v=\tilde{\mu}}^{\tilde{\mu}+S-1} \text{Re}\left\{ r_v \cdot e^{-j(\Delta\tilde{\omega} vT_s + \Delta\tilde{\Phi})} \cdot sync_{v-\tilde{\mu}}^* \right\} + \sum_{v_{ren}} |r_v| \cdot |\hat{a}_v| \right)$$

$$(5)$$

Um bei den beiden Thermen gleiche Summationsgrenzen zu bekommen, wird zur Vereinfachung auf der rechten Seite von Gl.(5) zusätzlich mit der von den Schätzparametern unabhängige Konstante

$$-\sum_{v=0}^{R-1} |r_v| \cdot |\hat{a}_v|$$

erweitert und erhält damit die Log-Likelihood-Funktion nach Gl.(6)

$$l\left(\tilde{\mu}, \Delta\tilde{\omega}, \Delta\tilde{\Phi}\right) = \sum_{v=\tilde{\mu}}^{\tilde{\mu}+S-1} \text{Re}\left\{ r_v \cdot e^{-j(\Delta\tilde{\omega} vT_s + \Delta\tilde{\Phi})} \cdot sync_{v-\tilde{\mu}}^* \right\} - |r_v| \cdot |\hat{a}_v|$$

$$(6)$$

Veranschaulichung: Der erste Therm in Gl.(6) beschreibt eine Korrelation zwischen der frequenz-und phasenkompensierten Empfangsfolge mit der konjugiert komplexen Sync-Sequenz und der zweite Therm kann als Maßnahme zur Störbefreiung betrachtet werden. Das läßt sich einfach verstehen, wenn man von einer fehlerfreien Schätzung von $|\hat{a}_v|$ ausgeht. Dann kann die Näherung

$$|r_v| \cdot |\hat{a}_v| \ \approx \ \text{Re}\left\{ r_v \cdot e^{-j(\Delta\omega vT_s + \Delta\Phi)} \cdot a_v^* \right\}$$

in Gl.(6) eingesetzt werden und erhält bei exakter Frequenz- und Phasenkompensation

$$l(\tilde{\mu}, \Delta\omega, \Delta\Phi) = \sum_{v=\tilde{\mu}}^{\tilde{\mu}+S-1} \text{Re}\left\{ r_v \cdot e^{-j(\Delta\omega vT_s + \Delta\Phi)} \cdot \left( sync_{v-\tilde{\mu}} - a_v \right)^* \right\}$$

Folglich ergibt sich zum Sync-Zeitpunkt $\tilde{\mu} = \mu$ mit $sync_{v-\mu} = a_v$ exakt das Maximum $l(\mu, \Delta\omega, \Delta\Phi) = 0$ und ist damit zum Sync-Zeitpunkt störungsfrei.

Allerdings ist die zu maximierende Log-Likelihood-Funktion in Gl.(6) noch von dem Frequenz- und Phasenversatz abhängig. Die nachfolgenden Näherungen haben deshalb zum Ziel, diese Abhängigkeiten zu eleminieren. Dazu wird die Log-Likelihood-Funktion in GI.(6) beim tatsächlichen Frequenz- und Phasenversatz betrachtet. Durch Vertauschung von Summen- und Realteilbildung erhält man

$$l(\tilde{\mu}, \Delta\tilde{\omega}, \Delta\Phi) = \mathrm{Re}\left\{\sum_{v=\tilde{\mu}}^{\tilde{\mu}+S-1} r_v \cdot e^{-j(\Delta\tilde{\omega}\,vT_s + \Delta\Phi)} \cdot sync_{v-\tilde{\mu}}^*\right\} - \sum_{v=\tilde{\mu}}^{\tilde{\mu}+S-1} |r_v| \cdot |\hat{a}_v|$$

Zum Sync-Zeitpunkt sind die inneren Produkte des ersten Thermes bei Vernachlässigung der Störung exakt reell, so daß die Näherung

$$l(\tilde{\mu}, \Delta\tilde{\omega}) = \left|\sum_{v=\tilde{\mu}}^{\tilde{\mu}+S-1} r_v \cdot e^{-j(\Delta\tilde{\omega}\,vT_s + \Delta\Phi)} \cdot sync_{v-\tilde{\mu}}^*\right| - \sum_{v=\tilde{\mu}}^{\tilde{\mu}+S-1} |r_v| \cdot |\hat{a}_v|$$

$$= \underbrace{\left|\sum_{v=\tilde{\mu}}^{\tilde{\mu}+S-1} r_v \cdot e^{-j\Delta\tilde{\omega}\,vT_s} \cdot sync_{v-\tilde{\mu}}^*\right|}_{\text{1 Therm}} - \underbrace{\sum_{v=\tilde{\mu}}^{\tilde{\mu}+S-1} |r_v| \cdot |\hat{a}_v|}_{\text{2 Therm}}$$

$$(7)$$

gemacht werden kann und damit die Log-Likelihood-Funktion unabhängig vom Phasenversatz wird. Um den Frequenzversatz analytsich schätzen zu können, werden durch eine weitere Näherung die beiden Therme in GI.(7) quadriert und erhält

$$l(\tilde{\mu}, \Delta\tilde{\omega}) = \left|\sum_{v=\tilde{\mu}}^{\tilde{\mu}+S-1} r_v \cdot e^{-j\Delta\tilde{\omega}\,vT_s} \cdot sync_{v-\tilde{\mu}}^*\right|^2 - \left(\sum_{v=\tilde{\mu}}^{\tilde{\mu}+S-1} |r_v| \cdot |\hat{a}_v|\right)^2$$

$$= \sum_{v_1=\tilde{\mu}}^{\tilde{\mu}+S-1} \sum_{v_2=\tilde{\mu}}^{\tilde{\mu}+S-1} r_{v_1} \cdot r_{v_2}^* \cdot sync_{v_1-\tilde{\mu}}^* \cdot sync_{v_2-\tilde{\mu}} \cdot e^{-j\Delta\tilde{\omega}(v_1-v_2)T_s} - |r_{v_1} \cdot r_{v_2}^*| \cdot |\hat{a}_{v_1}| \cdot |\hat{a}_{v_2}|$$

Durch Substitution der Indices erhält man schließlich

$$l(\tilde{\mu}, \Delta\tilde{\omega}) = \sum_{v=\tilde{\mu}}^{\tilde{\mu}+S-1} |r_v|^2 \cdot |sync_{v-\tilde{\mu}}|^2 - |r_v|^2 \cdot |\hat{a}_v|^2$$

$$+ \sum_{\alpha=1}^{S-1} 2\,\mathrm{Re}\left\{e^{-j\Delta\tilde{\omega}\cdot\alpha\cdot T_s} \cdot \underbrace{\sum_{v=\tilde{\mu}+\alpha}^{\tilde{\mu}+S-1} r_v \cdot r_{v-\alpha}^* \cdot sync_{v-\tilde{\mu}}^* \cdot sync_{v-\alpha-\tilde{\mu}} - |r_v \cdot r_{v-\alpha}^*| \cdot |\hat{a}_v| \cdot |\hat{a}_{v-\alpha}|}_{S-\alpha\ \text{Summationen}}\right\}$$

Zwecks kürzerer Schreibweise wurde der zweite Therm trotz Reellwertigkeit auch in die Realteilklammer genommen. Man sieht, daß in der ersten Zeile mit $\alpha = 0$ eine Korrelation der Symbolenergien gemacht wird, was für MPSK nicht brauchbar ist. Der $\alpha = 1$ Summand besitzt den Vorteil, daß der Schätzbereich des Frequenzbereiches maximal ist und außerdem analytisch bestimmt werden kann, wie sich nachfolgend zeigen wird. Deshalb wird in der weiteren Betrachtung nur der $\alpha = 1$-te Summand verwendet. Das Weglassen der restlichen Summanden hat zur Konsequenz, daß ein Störabstandsverlust in Kauf genommen wird, der i.a. akzeptierbar ist. Auf diesen Verlust wird nochmals später eingegangen.

Mit dieser Näherung ergibt sich die Log-Likelihood-Funktion

$$l(\bar{\mu}, \Delta\tilde{\omega}) = \underset{\text{irrelevant}}{2} \text{Re}\left\{ e^{-j\Delta\tilde{\omega}\cdot T_s} \cdot \sum_{v=\bar{\mu}+1}^{\bar{\mu}+S-1} r_v \cdot \overset{*}{r}_{v-1} \cdot sync^*_{v-\bar{\mu}} \cdot sync_{v-1-\bar{\mu}} - \left| r_v \cdot \overset{*}{r}_{v-1} \right| \cdot |\hat{a}_v| \cdot |\hat{a}_{v-1}| \right\}$$

Man beachte, daß nur noch $S$ - 1 Summationen auftreten. Mit den Definitionen nach Gl.(8)

$$dr_v = r_v \cdot \overset{*}{r}_{v-1}$$
$$dsync_v = sync_v \cdot \overset{*}{sync}_{v-1}$$

(8)

erhält man

$$l(\bar{\mu}, \Delta\tilde{\omega}) = \text{Re}\left\{ e^{-j\Delta\tilde{\omega}\,T_s} \cdot \underbrace{\sum_{v=\bar{\mu}+1}^{\bar{\mu}+S-1} dr_v \cdot dsync^*_{v-\bar{\mu}}}_{=: korr(\bar{\mu})} \right\} - \sum_{v=\bar{\mu}+1}^{\bar{\mu}+S-1} |dr_v| \cdot |\hat{a}_v| \cdot |\hat{a}_{v-1}|$$

(9)

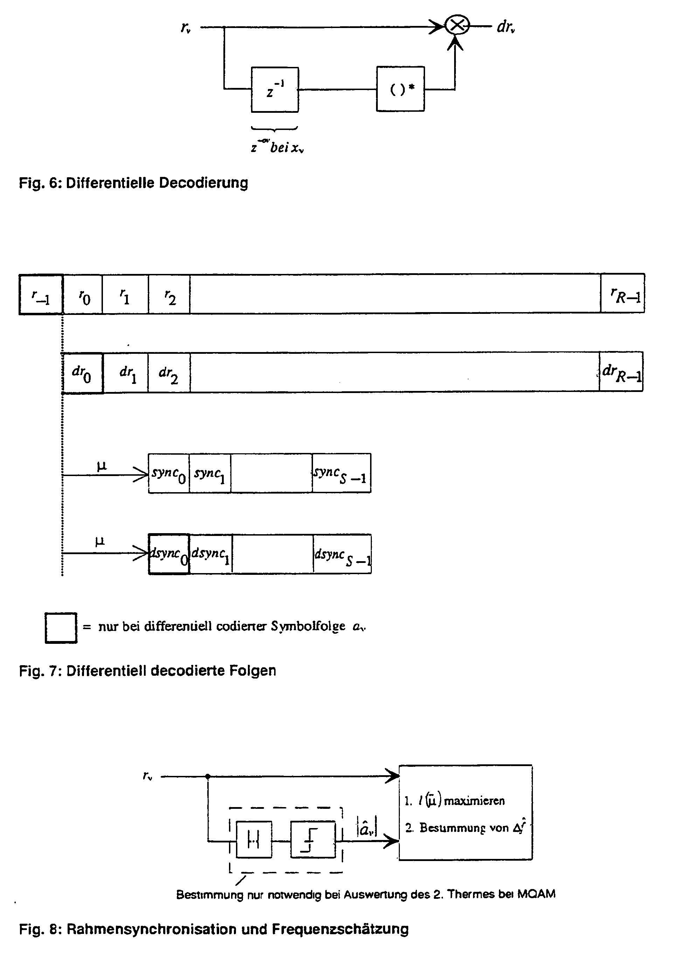

Die differentielle Dekodierung der Empfangsfolge wird in **Fig. 6** gezeigt. Man beachte, daß die Folge $sync_v$ zwar bei $v$ = 0 beginnt. die differentielle Folgen $dsync_v$ aufgrund der Verzögerung um eine Symbolperiode (siehe Gl.(9)) erst bei $v$ = 1 beginnt. Diese Einschränkung gilt bei dem nachfolgenden Algorithmus aber nicht, wenn es sich bei $a_v$ um eine differentiell codierte Folge handelt, weil dann $dsync_0$ bekannt ist. Dieser Sachverhalt wird nochmals in Fig. 7 veranschaulicht.

Damit läßt sich die Maximierung der Log-Likelihood-Funktion in Gl.(9) durch zwei kaskadierte Maximierungen vereinfachen: Zuerst wird die Maximierung bzgl. $\bar{\mu}$ durchgeführt. Man sieht, daß die konstante Phase durch den Frequenzversatz im ersten Therm bei $\Delta\tilde{f} = \Delta f$ ein Zurückdrehen von $korr$ ($\mu$) auf die Realteilachse bewirkt. Folglich kann in guter Näherung ebenso $|korr(\mu)|$ maximiert werden. Damit ergibt sich die Schätzvorschrift für den Sync-Zeitpunkt û durch Maximierung von Gl.(10)

$$l(\bar{\mu}) = \underbrace{\left| \sum_{v=\bar{\mu}+1}^{\bar{\mu}+S-1} dr_v \cdot dsync^*_{v-\bar{\mu}} \right|}_{1.\,\text{Therm}} - \underbrace{\sum_{v=\bar{\mu}+1}^{\bar{\mu}+S-1} |dr_v| \cdot |\hat{a}_v| \cdot |\hat{a}_{v-1}|}_{2.\,\text{Therm}}$$

*** nicht bei differentieller Codierung von $a_v$

(10)

Bei großem Störabstand reicht die alleinige Auswertung des 1.Thermes aus, weil dann der durch den 2.Therm erzielte Störabstandsgewinn von ca. 3 dB nicht notwendig ist.

Wie bereits am Anfang erwähnt, gilt die Vorschrift in Gl.(10) auch für die nicht timingkompensierte Folge. Dann muß anstelle der Folge $r_v$ die Folge $x_{ov\cdot v+\lambda}$ mit $\lambda$ =[0,$ov$-1] in Gl.(8) verwendet werden. Der Faktor $ov$ im Index ist notwendig, weil nur Abtastwerte im Abstand der Symbolperiode verwendet werden. Der Index $\lambda$ ist notwendig, weil die Auswertung der Log-Likelihood-Funktion nicht im Symbolraster, sondern im Abtastraster durchgeführt werden muß. Das hat zur Konsequenz, daß der Signalverarbeitungsaufwand um den Faktor $ov$ ansteigt.

Möchte man einen möglichst genauen Frequenzschätzwert erhalten, sollte die nachfolgend beschriebene Frequenzschätzung nicht mit Hilfe von $x_v$, sondern mit $r_v$ durchgeführt werden. Der Frequenzschätzwert ergibt sich bei

geschätztem μ aus GI.(9): Die Log-Likelihood-Funktion wird dann maximal, wenn der Realteilausdruck von GI.(9) rein reell und positiv ist. Somit ergibt sich der Frequenzschätzwert durch GI.(11)

$$\Delta \hat{f} \ = \ \frac{1}{2\pi T_s} \cdot \arg\{korr(\hat{\mu})\}$$

$$(11)$$

mit $korr(\hat{\mu})$ von GI.(9). Man beachte, daß der zu schätzende Frequenzversatz sowohl positiv als auch negativ sein kann. Folglich darf das Argument in GI.(11) im Sinne einer eindeutigen Bestimmung die Phase $\pi$ nicht überschreiten. Damit erhält man den theoretisch zulässigen Frequenzversatz von

$$\left|\Delta f / f_s\right| \ \overset{!}{\leq} \ 0.5$$

Eine andere Herleitung erhält man aus der Überlegung, daß das Abtasttheorem bei einem Sample/Symbolperiode nur für Drehzeiger erfüllt wird, deren Frequenz kleiner als die halbe Symbolfrequenz ist
Da der zulässige Frequenzversatz bei den Non-Data-Aided Verfahren kleiner ist (z.B. bei MQAM um den Faktor vier), ist damit durch die Grobschätzung nach GI.(11) ein größerer Frequenzversatz zwischen Sender und Empfänger zulässig.
Aufgrund der durchgeführten Näherungen handelt es sich in GI.(11) nicht um den optimalen Schätzwert. Alternativ kann dennoch der Maximum-Likelihood-Schätzer für Modulationsverfahren mit $|a_v| = 1$ durch eine nur etwas rechenaufwendigere Berechnungsvorschrift implementiert werden. Die Grundlage zur Berechnung ist aus der Literatur bekannt (Jack K. Wolf, Jay W. Schwartz: "Comparison of Estimators for Frequency Offset", IEEE Trans. on Comm., 1990, Pg. 124-127). Allerdings wird im Gegensatz zu dem in der Literatur vorgeschlagenen Verfahren nicht eine Phasen- sondern eine Zeigermittelung durchgeführt. Diese planare Filterung besitzt u.a. den Vorteil, daß bei $|\Delta f/f_s|\rightarrow 0.5$ der Gesamtzeiger durch den Mittelungseffekt mit höherer Wahrscheinlichkeit im entsprechenden Quadranten liegt. Bei Phasenmittelung hingegen würde ein durch Störungen verursachter "Ausreißer" den Schätzwert unbrauchbar machen. Beispiel: $\Delta f/f_s$ =-0.45, d.h. der störungsfreie Zeiger müßte ein Phase von -162 Grad besitzen. Würde ein Ausreißer im 3.Quadranten mit einer Phase von z.B. +185 Grad liegen, ist das Ergebnis bei Phasenmittelung aufgrund des Vorzeichenwraps bei $\pm$180 Grad unbrauchbar. Folglich darf durch die Zeigermittelung fast der theroretisch zulässige Frequenzbereich von $|\Delta f/f_s|$=0.5 zugelassen werden. Weiterhin besitzt die Zeigermittelung den Vorteil, daß nur einmal die rechenintensive Argumentbildung notwendig ist. Die Berechnungsvorschrift **ergibt sich durch GI.(12)**

$$\Delta \hat{f} \ = \ \frac{1}{2\pi T_s} \cdot \arg\left\{ \underbrace{\sum_{v=\hat{\mu}+1}^{\hat{\mu}+S-1} koeff_v \cdot dr_v \cdot dsync_{v-\hat{\mu}}^*}_{Gesamtzeiger} \right\}$$

$$(12)$$

mit den Koeffizienten

$$koeff_v \ = \ \frac{6v \cdot (S - v + 1)}{S \cdot (S + 1) \cdot (S + 2)}$$

Der Gewinn durch die optimale Schätzung nach GI.(12) nimmt mit steigender Sync-Länge $S$ zu. Bei $S = 21$ wird beispielsweise die Standardabweichung des Schätzfehlers um den Faktor 2 reduziert.
Falls die Varianz des Schätzfehlers durch eine Syncfolge zu groß ist, besteht außerdem die Möglichkeit, die Fehlervarianz durch Filterung (z.B. Kalman-Filter) der einzelnen Frequenzschätzwerte zu reduzieren. Empfehlenswert ist aus dem oben beschriebenen Gründen eine planare Filterung der Gesamtzeiger der einzelnen Frequenzschätzwerte mit anschließender normierter Argumentbildung.
Wie groß ist der Störabstandsverlust gegenüber der Rahmensynchronisation mit vorheriger Frequenz-und Phasenkompensation mit der Synchronisationsvorschrift nach Gl.(6)? Der wesentliche Unterschied besteht darin, daß anstelle der Folge $r_v$ die differentiell dekodierte Folge $dr_v$ verwendet wird. Mit

$$r_v = a_v + \underbrace{n_v}_{\text{Varianz } \sigma^2}$$

ergibt sich bei der differentiell dekodierten Folge

$$
\begin{aligned}
dr_v &= r_v \cdot r_{v-1}^* \\
&= (a_v + n_v) \cdot (a_{v-1} + n_{v-1})^* \\
&= a_v a_{v-1}^* + \underbrace{a_v n_{v-1}^* + a_{v-1}^* n_v}_{\text{Störung } dn_v} + \underbrace{n_v n_{v-1}^*}_{\text{vernachlässigbar für } E_s/N_0 \gg 1}
\end{aligned}
$$

Das Kreuzprodukt das Rauschfolge kann bei großem Störabstand vernachlässigt werden. Man sieht, daß die Störung $dn_v$ ebenso wie $n_v$ unkorreliert ist. Geht man von dem Modulationsverfahren MPSK mit $|a_v| = const$ aus. ergibt sich der der normierte Wert

$$\frac{dr_v}{a_{v-1}^*} = a_v + \underbrace{\frac{a_v}{a_{v-1}^*}}_{|\cdot|=1} n_{v-1}^* + n_v$$

$$\underbrace{\qquad\qquad\qquad}_{\text{Varianz } 2\sigma^2}$$

Da die benachbarten Samples der Rauschfolge $n_v$ unkorreliert sind, erhöht sich damit bei MPSK die Rauschvarianz um den Faktor 2, was einem Störababstandsverlust von 3 dB entspricht. Da die Performance der Rahmensynchronisation im wesentlichen von dem Verhältnis von Energie der Syncfolge zur Rauschleistungsdichte gemäß $E_{sync}/N_0$ abhängt und i.a. groß ist, stellt dieser Verlust nur bei Übertragungsstrecken mit extrem niedrigen Störabstand und kurzer Sync-Folge ein Problem dar.

In **Fig. 8** werden nochmals die wesentlichen Schritte der Rahmensynchronisation und Frequenzschätzung gezeigt.

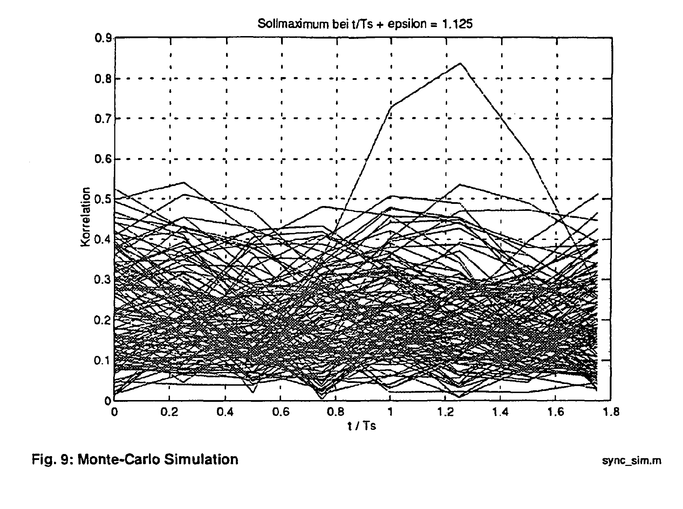

Zur Demonstration der Leistungsfähigkeit wird in **Fig. 9** eine Monte-Carlo-Simulation zur Rahmensynchronisation einer π/4-DQPSK-Übertagung mit Wurzel-Nyquist Sende- und Empfangsfilter mit einem Roll-Off-Faktor von $r = 0.35$ gezeigt. In dieser Fig. wird das Augenmuster des Korrelationsthermes in Gl.(10) gezeigt, d.h. durch das Weglassen des 2.Thermes handelt es sich hier nicht einmal um die optimale Methode. Als Sync-Folge wurde die Extended-Trainings-Sequenz vom TETRA-Mobilfunk mit $S = 15$ Symbolen verwendet. Die Rahmensynchronisation wurde durch die nicht timingkompensierte Folge $x_v$ durchgeführt. Weiterhin wurden folgende Paramter eingestellt:

$$ov = 4,\ \varepsilon = 0.5/ov = 0.125,\ \Delta f/f_s = 0.2,\ E_s/N_0 = 8\ \text{dB},$$

d.h. es liegt der ungünstigste Fall vor, da die Symbolzeitpunkte genau in der Mitte zwischen den Abtastwerten liegen. Weiterhin wurde ein großer Frequenzversatz von 20 % der Symbolrate und geringer Störabstand von $E_s/N_0 = 8$ dB vorgegeben. Aus dem Bild sieht man, daß das Maximum der Korrelation beim nächstliegenden Sample zum Synczeitpunkt auftritt und damit der Synczeitpunkt richtig geschätzt wurde. Der Restversatz ε wird in der nachfolgenden Timing-Kompensation rückgängig gemacht.

**Patentansprüche**

1.  Verfahren zum Ermitteln einer Trägerfrequenzabweichung wobei zunächst die zeitliche Lage einer Synchronisationsfolge in einer empfangenen Empfangsfolge unter Anwendung des Prinzips der Maximum-Likelihood-Theorie bestimmt wird, wobei diese Bestimmung aus der empfangenen Empfangsfolge vor der Frequenz- und Phasensynchronisation durchgeführt wird,

wobei mit Hilfe der bestimmten zeitlichen Lage der Synchronisationsfolge die Trägerfrequenzabweichung aus dem Argument des Ergebnisses der Korrelation zwischen der differentiell decodierten empfangenen Empfangsfolge beginnend mit der bestimmten zeitlichen Lage der Synchronisationsfolge mit der empfangsseitig bekannten konjugiert komplexen differentiell decodierten Synchronisationsfolge berechnet wird.

**2.** Verfahren nach Anspruch 1, wobei bei der Berechnung der Trägerfrequenzabweichung, gleichzeitig noch ein Term zur Störbefreiung berücksichtigt wird.

**3.** Verfahren nach einem der Ansprüche 1 und 2, wobei die Bestimmung noch vor der Taktsynchronisation durchgeführt wird.

**4.** Verfahren nach einem der Ansprüche 1 und 2, wobei <u>dass</u> diese Bestimmung erst nach der Taktsynchronisation durchgeführt wird.

**5.** Verfahren nach einem der Ansprüche 1 bis 4,
wobei hierbei als Näherungslösung der Maximalwert der Korrelation zwischen der differentiell decodierten empfangenen Datenfolge mit der empfangsseitig bekannten konjugiert komplexen differentiell decodierten Synchronisationsfolge berücksichtigt wird.

**6.** Verfahren nach Anspruch 4 oder 5,
wobei
hierbei die Mittelung nicht über Phasenwerte, sondern über Zeigerwerte mit anschließender Argumentbildung durchgeführt wird.

## Claims

**1.** Method for determining a carrier-frequency deviation, wherein the time position of a synchronisation sequence in a received reception sequence is initially determined using the principle of the maximum likelihood theory; wherein this determination from the received reception sequence is implemented before the frequency and phase synchronisation; wherein the carrier-frequency deviation is calculated, with the assistance of the determined time position of the synchronisation sequence, from the argument of the result of the correlation between the differentially-decoded, received reception sequence starting with the determined time position of the synchronisation sequence with the receiver-end, known, conjugated, complex, differentially-decoded synchronisation sequence.

**2.** Method according to claim 1, wherein a term for interference-removal is taken into consideration at the same time in the calculation of the carrier frequency deviation.

**3.** Method according to any one of claims 1 and 2, wherein the determination is implemented even before the clock-pulse synchronisation.

**4.** Method according to any one of claims 1 and 2, wherein the determination is implemented only after the clock-pulse synchronisation.

**5.** Method according to any one of claims 1 to 4, wherein the maximum value of the correlation between the differentially-decoded, received data sequence with the receiver-end, known, conjugated, complex, differentially-decoded synchronisation sequence is taken into consideration in this context as an approximate solution.

**6.** Method according to claim 4 or 5, wherein the averaging is not implemented via phase values in this context, but via phasor values with subsequent argument formation.

## Revendications

**1.** Procédé pour la détermination de la dérive d'une fréquence porteuse, dans lequel a d'abord lieu la détermination de la position chronologique d'une séquence de synchronisation dans une séquence de réception reçue en utilisant le principe de la théorie de la vraisemblance maximale, dans lequel cette détermination à partir de la séquence de réception reçue est réalisée avant la synchronisation de la fréquence et de la phase et dans lequel la dérive de la fréquence porteuse est calculée à l'aide de la position chronologique déterminée de la séquence de synchronisation à partir de l'argument du résultat de la corrélation entre la séquence de réception reçue et décodée de manière différentielle en commençant par la position chronologique déterminée de la séquence de synchronisation avec la séquence de synchronisation complexe conjuguée, connue du côté réception et décodée de manière différentielle,

2. Procédé selon la revendication 1, **caractérisé en ce que**, lors du calcul de la dérive de la fréquence porteuse, il est encore simultanément tenu compte d'un terme pour l'élimination des perturbations.

3. Procédé selon l'une quelconque des revendications 1 et 2, **caractérisé en ce que** la détermination est encore réalisée avant la synchronisation d'horloge.

4. Procédé selon l'une quelconque des revendications 1 et 2, **caractérisé en ce que** cette détermination n'est réalisée qu'après la synchronisation d'horloge.

5. Procédé selon l'une quelconque des revendications 1 à 4, **caractérisé en ce qu'**il est tenu compte comme solution approchée de la valeur maximale de la corrélation entre la séquence de données reçue et décodée de manière différentielle avec la séquence de synchronisation complexe conjuguée, connue du côté réception et décodée de manière différentielle.

6. Procédé selon la revendication 4 ou 5, **caractérisé en ce que** le calcul d'une moyenne n'est exécutée par l'intermédiaire de valeurs de phases mais par l'intermédiaire de valeurs de pointeurs avec une formation d'argument correspondante.

$b(v) \in \{0,1\}$

m-bit
S/P - Wandler

1
⋮
m

Signalraum
Zuordnung
(Mapper)

$a_{I,}$

$h_s(t)$

$s_{HF}(t)$

$a_{Q,}$

$h_s(t)$

$-\sqrt{2}\sin(2\pi \, f_0 t)$

90°

$\sqrt{2}\cos(2\pi \, f_0 t)$

Oszillator

1

2

3

**Fig. 1: Generierung eines QAM-Signals**

$s_{HF}(t)$

$h_E(t)$

$\text{Re}\{x(t)\}$

$vT_A$

8

Oszillator

90°

4

6

$h_E(t)$

$\text{Im}\{x(t)\}$

5

Oszillator

7

**Fig. 2: Empfänger**

Fig. 3: Modell der Übertragungsstrecke im äquivalenten Basisband

Fig. 4: Synchronisationskonzept

Fig. 5: Synchronsationsfolge

$r_v$ ————————————————⊗———— $dr_v$

$z^{-1}$ $()^*$

$z^{-\omega} bei\ x_v$

**Fig. 6: Differentielle Decodierung**

| $r_{-1}$ | $r_0$ | $r_1$ | $r_2$ | | $r_{R-1}$ |

| $dr_0$ | $dr_1$ | $dr_2$ | | $dr_{R-1}$ |

$\mu$ ⟶ | $sync_0$ | $sync_1$ | | $sync_{S-1}$ |

$\mu$ ⟶ | $dsync_0$ | $dsync_1$ | | $dsync_{S-1}$ |

□ = nur bei differentiell codierter Symbolfolge $a_v$

**Fig. 7: Differentiell decodierte Folgen**

$r_v$ ————————•——————————⟶

|·| ∫ $|\hat{a}_v|$

1. $l(\hat{\mu})$ maximieren

2. Bestimmung von $\Delta\hat{f}$

Bestimmung nur notwendig bei Auswertung des 2. Thermes bei MQAM

**Fig. 8: Rahmensynchronisation und Frequenzschätzung**

Sollmaximum bei t/Ts + epsilon = 1.125

Fig. 9: Monte-Carlo Simulation

sync_sim.m